# EUROPÄISCHE PATENTSCHRIFT

(11) **EP 2 932 165 B1**
(45) Veröffentlichungstag und Bekanntmachung des Hinweises auf die Patenterteilung: **19.04.2017**
(21) Anmeldenummer: 13798641.0
(22) Anmeldetag: 28.11.2013
(51) Int. Cl.: F24H 4/04, F24H 9/20

(54) **HEIZUNGSVORRICHTUNG UND VERFAHREN ZU DEREN BETRIEB**
HEATING DEVICE AND METHOD FOR OPERATING SAME
DISPOSITIF DE CHAUFFAGE ET PROCÉDÉ POUR LE FONCTIONNEMENT DUDIT DISPOSITIF DE CHAUFFAGE

(30) Priorität: 13.12.2012 DE 102012024347
(43) Veröffentlichungstag der Anmeldung: 21.10.2015
(73) Patentinhaber: Robert Bosch GmbH, 70442 Stuttgart (DE)
(72) Erfinder: POTRA, Joao, P-3800-009 Aveiro (PT); CORTE-REAL, Jose, P-3800-340 Aveiro (PT)
(86) Internationale Anmeldenummer: PCT/EP2013/074951
(87) Internationale Veröffentlichungsnummer: WO 2014/090582

(56) Entgegenhaltungen:
- EP-A2- 1 298 395
- WO-A1-2010/064406
- JP-B- 3 651 942

## Beschreibung

Die Erfindung betrifft ein Verfahren zum Betrieb einer Heizungsvorrichtung nach dem Oberbegriff des Anspruchs 1 und eine Heizungsvorrichtung nach dem Oberbegriff des Anspruchs 5.

Aus dem Stand der Technik sind verschiedene Heizungsvorrichtungen zur Erwärmung eines Fluids in einem Fluidspeicher bekannt, so zum Beispiel zur Bereitstellung eines Warmwasservorrats.

Eine Variante sieht hierbei eine Erwärmung des Fluids innerhalb des Speichers durch einen Wärmetauscher vor. In einer anderen Variante wird zunächst kühleres Fluid aus einem unteren Bereich des Fluidspeichers entnommen, dann außerhalb des Speichers erwärmt und anschließend in einen oberen Bereich des Fluidspeichers zurückgeführt. Aufgrund einer temperaturabhängigen Dichte des Fluids schichtet sich das Fluid von oben warm bis unten kalt im Fluidspeicher ein. Für die Förderung des Fluids durch den Wärmetauscher ist eine Pumpe in dessen Vorlauf oder Rücklauf erforderlich.

Problematisch hierbei ist, dass das Fluid im oberen Bereich des Fluidspeichers für die Entnahme von Fluid durch einen Verbraucher eine bestimmte Solltemperatur aufweisen soll. Ist das im Vorlauf des Wärmetauschers anströmende Fluid sehr kalt, liegt die Temperatur im Rücklauf immer noch unterhalb der Solltemperatur. Es dauert mithin relativ lang, bis im Entnahmebereich des Fluidspeichers Fluid mit der gewünschten Solltemperatur vorliegt. Dies ist für den Verbraucher unkomfortabel. Außerdem kann die Fluidtemperatur im Entnahmebereich über die Solltemperatur ansteigen, wenn das Fluid bereits im Vorlauf des Wärmetauschers relativ warm ist. Dies kann zu Verbrühungen und anderen Schäden führen. Zwar können diese Probleme durch Anpassung der Heizleistung am Wärmetauscher vermieden werden, jedoch haben Heizungsvorrichtungen, wie zum Beispiel Wärmepumpen eine maximale Effizienz bei einer definierten Heizleistung. Ein Betrieb abseits des Betriebsoptimums führt zu erhöhten Kosten und ist nicht ökologisch. Die JP3651942B offenbart eine Heizungsvorrichtung und ein Verfahren zu dessen Betrieb nach dem Oberbegriff der Ansprüche 5 bzw 1. Nachteilig ist hier, dass das Dreiwegeventil nur zwischen zwei Schaltstellungen hin und hergeschaltet wird. Dadurch ergeben sich Temperaturschwankungen im Rücklauf was zu einer unstabilen Einschichtung in den Speichertank führt. Der Erfindung liegt daher die Aufgabe zugrunde, die Nachteile des Standes der Technik zu beseitigen und eine Heizungsvorrichtung sowie ein Verfahren zu deren Betrieb zu entwickeln, mit denen jeweils eine hohe Effizienz der Heizungsvorrichtung erreicht wird und gleichzeitig stets Fluid mit einer Solltemperatur aus einem Fluidspeicher entnehmbar ist. Auf Einfachheit, geringe Herstellkosten und Zuverlässigkeit im Betrieb ist zu achten.

Erfindungsgemäß wird dies mit den Merkmalen der Patentansprüche 1 und 5 gelöst.

Vorteilhafte Weiterbildungen sind den Unteransprüchen zu entnehmen.

Die erfindungsgemäße Ausgestaltung mit dem Dreiwegeventil und dem Bypass ist nunmehr dazu geeignet, Fluid über den Bypass zirkulierend bis auf eine Solltemperatur zu erwärmen. Erst wenn die Temperatur des Fluids die Solltemperatur erreicht, wird das Fluid zurück in den Fluidspeicher geleitet. Hier angekommen, schichtet sich das Fluid mit der Solltemperatur im oben liegenden Entnahmebereich des Fluidspeichers ein. Damit kann eine mit dem Wärmetauscher korrespondierende Heizung stets in Ihrem Betriebsoptimum betrieben werden, sodass die Betriebskosten gering sind, sowie eine hohe Effizienz und Umweltfreundlichkeit erreicht werden. Weiterhin sind die erforderlichen Bauteile wie Dreiwegeventil und Bypass im Verhältnis zu den Gesamtkosten der Heizungsvorrichtung und deren Betriebskosten vergleichsweise gering. Vorzugsweise ist der Wärmetauscher außerhalb des Fluidspeichers angeordnet. Hierdurch können verschiedene Heizungen, wie zum Beispiel mit fossilem Brennstoff befeuerte Heizungen, Wärmepumpen und solarthermische Anlagen unkompliziert mit dem Wärmetauscher gekoppelt werden. Auch der Bypass sollte außerhalb des Fluidspeichers angeordnet sein, da er hier einfach zugängig ist. Aus gleichem Grunde sollten die Pumpe und/oder das Dreiwegeventil außerhalb des Fluidspeichers liegen.

In einer Weiterbildung der Erfindung ist vorgesehen, dass der Wärmetauscher ein Kondensator einer Wärmepumpe ist. Gerade Wärmepumpen haben ein sehr enges Betriebsoptimum. Mit erfindungsgemäßem Dreiwegeventil und Bypass ist die Wärmepumpe jedoch stets in diesem Betriebsoptimum betreibbar, ohne dass es zu Abweichungen von der Solltemperatur kommt.

Um einen automatisierten Einsatz der Heizungsvorrichtung zu erreichen, ist das Dreiwegeventil gemäß einer Variante der Erfindung regelbar. Es kann mithin automatisiert und damit komfortabel in unterschiedliche Schaltstellungen gebracht werden.

Bei einer Weiterentwicklung der Heizungsvorrichtung ist in der Rücklaufleitung zwischen dem Wärmetauscher und dem Bypass ein erster Temperatursensor zur Erfassung einer ersten Fluidtemperatur in der Rücklaufleitung angeordnet. Basierend auf der ermittelten ersten Fluidtemperatur kann das Dreiwegeventil zeitnah geschaltet werden. Die Solltemperatur wird so kontinuierlich eingehalten.

Ferner sieht eine Fortbildung der Heizungsvorrichtung vor, dass die Rücklaufleitung in einen geodätisch oben im Fluidspeicher angeordneten Entnahmebereich mündet. Außerdem kann hier ein zweiter Temperatursensor zur Erfassung einer zweiten Fluidtemperatur im Entnahmebereich vorgesehen sein. Das Münden in den oberen Bereich vermeidet Konvektionsströmungen innerhalb des Fluidspeichers, sodass die Temperaturschichten des Fluids klar voneinander getrennt sind. Hierdurch ist die Effizienz der Heizungsvorrichtung hoch, da das Fluid in der Vorlaufleitung möglichst kühl ist. Im Wärmetauscher liegt so eine maximale Temperaturdifferenz vor. Hierfür ist es besonders günstig, wenn die Vorlaufleitung geodätisch unten mit dem Fluidspeicher verbunden ist.

Um unabhängig von der Einbaulage und der Betriebssituation ein Zurückströmen von Fluid aus dem Fluidspeicher in die Rücklaufleitung zu vermeiden, bietet es sich an, in der Rücklaufleitung zwischen dem Fluidspeicher und dem Bypass ein Rückschlagventil anzuordnen. Dies ist insbesondere zu empfehlen, wenn Schaltstellungen des Dreiwegeventils vorgesehen sind, bei denen der Bypass nur teilweise freigegeben wird.

Weiterhin ist von einer Variante der Erfindung vorgesehen, dass das Dreiwegeventil von einer Regeleinheit angesteuert ist, in der eine Solltemperatur hinterlegt ist, und die datenkommunizierend mit dem ersten Temperatursensor verbunden ist. Eine solche Regeleinheit ist zum automatisierten Betrieb der Heizungsvorrichtung besonders geeignet, da sie in Abhängigkeit von der Solltemperatur das Dreiwegeventil verstellen kann.

Die Erfindung betrifft außerdem ein Verfahren zum Betrieb einer zuvor beschriebenen Heizungsvorrichtung, bei dem die Pumpe aktiviert und der Wärmetauschers mit Fluid durchströmt wird. Dabei wird im Wärmetauscher Wärme auf das Fluid übertragen. In der Rücklaufleitung zwischen dem Wärmetauscher und dem Bypass erfolgt eine Bestimmung einer ersten Fluidtemperatur, welche anschließend mit einer Solltemperatur verglichen wird. Wenn die erste Fluidtemperatur kleiner als die Solltemperatur ist, wird das Dreiwegeventil in eine erste Schaltstellung geschaltet, bei welcher der Bypass wenigstens teilweise freigegeben ist. Ist die erste Fluidtemperatur hingegen größer als die Solltemperatur, wird das Dreiwegeventils in eine zweite Schaltstellung geschaltet, bei welcher der Bypass geschlossen ist.

Mit dem Verfahren ist es nunmehr möglich, unabhängig von der Heizleistung und der damit verbundenen auf das Fluid im Wärmetauscher übertragenen Wärmemenge, das Fluid stets auf die Solltemperatur zu erwärmen. Eine Heizung und damit die gesamte Heizungsvorrichtung kann daher stets im ökologischen und kostengünstigen Betriebsoptimum betrieben werden.

Durch ein teilweises Freigeben des Bypasses kann das Fluid in der Vorlaufleitung kontinuierlich vorgewärmt werden und gleichzeitig wird kontinuierlich Fluid mit Solltemperatur in den Fluidspeicher eingespeist. Das heißt, das Dreiwegeventil verteilt das auf Solltemperatur erwärmte Fluid mengenmäßig auf den Bypass und auf die Rücklaufleitung zum Fluidspeicher.

Eine Fortbildung des Verfahrens zeichnet sich dadurch aus, dass die Pumpe deaktiviert wird, wenn eine dritte Fluidtemperatur in der Vorlaufleitung vor dem Bypass höher ist als die Solltemperatur. Ist dies nämlich der Fall, so ist der Fluidspeicher bereits bis zu der Entnahmehöhe der Vorlaufleitung auf die Solltemperatur erwärmt und ein Fortsetzen der Erwärmung nicht möglich. Die Deaktivierung führt zu einem effizienten Betrieb der Heizungsvorrichtung.

Sofern eine Heizung ausschließlich mit dem Wärmetauscher gekoppelt ist, sollte auch die Heizung deaktiviert werden. Umgekehrt kann die Aktivierung der Pumpe von der Temperatur des Fluids im Fluidspeicher auf der Entnahmehöhe der Vorlaufleitung abhängig gemacht werden. Fällt sie um ein bestimmtes Maß unter die Solltemperatur ist eine Aktivierung angebracht. Um die Anzahl der Temperatursensoren gering zu halten, bietet es sich daher an, den dritten Temperatursensor auf der Entnahmehöhe der Vorlaufleitung anzuordnen.

In einer regeltechnisch einfachen Variante der Erfindung wird der Bypass in der ersten Schaltstellung des Dreiwegeventils vollständig freigegeben. Damit zirkuliert das Fluid solange vollständig über den Bypass, bis es die Solltemperatur erreicht. Anschließend wird es über die Rücklaufleitung in den Fluidspeicher geleitet und kühleres Fluid strömt nach, welches anschließend wiederum solange vollständig über den Bypass zirkuliert, bis es die Solltemperatur erreicht.

Um ein schnelles Hin- und Herschalten des Dreiwegeventils zu vermeiden, ist von einer Fortentwicklung des Verfahrens vorgesehen, dass bei einem Wechsel zwischen den Schaltstellungen des Dreiwegeventils eine Hysterese berücksichtigt wird. Damit muss stets eine Durchschreitung der Solltemperatur um ein bestimmtes Maß erfolgen, bevor die Schaltstellung gewechselt wird.

Nicht immer ist es erforderlich, Fluid mit Solltemperatur im Fluidspeicher bereitzustellen. Daher kann das Verfahren dahingehend ergänzt werden, dass ein vorrangiges Schalten des Dreiwegeventils in die zweite Schaltstellung erfolgt, wenn eine Einhaltung der Solltemperatur in einem geodätisch oben im Fluidspeicher angeordneten Entnahmebereich nicht erforderlich ist. Hierfür kann der Verbraucher festlegen zu welchen Tageszeiten ein erhöhter Komfort mit Fluid mit exakter Solltemperatur erforderlich ist. Zu den anderen Tageszeiten wird auf eine Zirkulation über den Bypass verzichtet, wodurch dann Fluid mit möglichst geringer Temperatur durch den Wärmetauscher geleitet wird. Mithin liegt eine hohe Temperaturdifferenz im Wärmetauscher vor. Damit ist die Effizienz der Heizungsvorrichtung besonders hoch.

Die Zeichnungen stellen Ausführungsbeispiele der Erfindung dar und zeigen in
- Fig. 1: eine Heizungsvorrichtung, bei der ein Dreiwegeventil in einer ersten Schaltstellung zwischen dem Bypass und der Rücklaufleitung angeordnet ist;
- Fig. 2: einen Bildausschnitt von der in Fig. 1 gezeigten Heizungsvorrichtung, wobei sich das Dreiwegeventil jedoch in der zweiten Schaltstellung befindet;
- Fig. 3: eine Heizungsvorrichtung, bei der ein Dreiwegeventil in einer ersten Schaltstellung zwischen dem Bypass und der Vorlaufleitung angeordnet ist; und
- Fig. 4: einen Bildausschnitt von der in Fig. 3 gezeigten Heizungsvorrichtung, wobei sich das Dreiwegeventil jedoch in der zweiten Schaltstellung befindet.

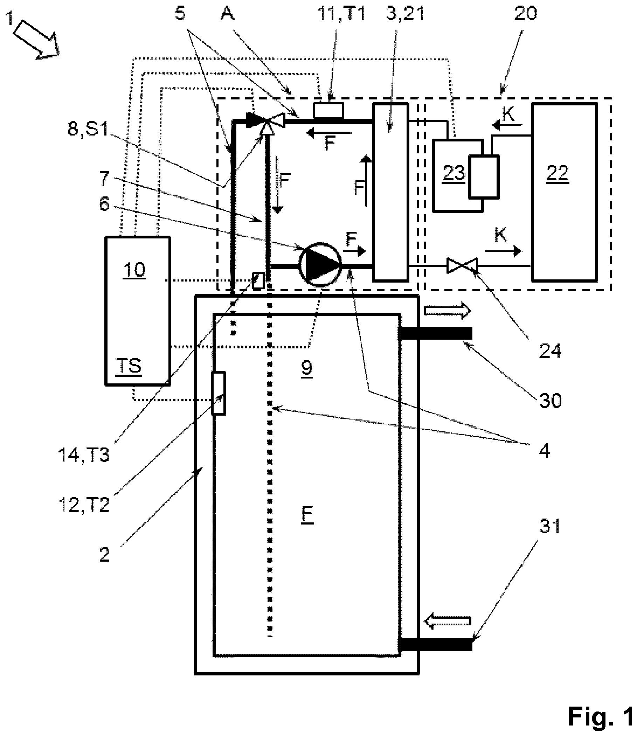

In Fig. 1 erkennt man eine Heizungsvorrichtung 1. Diese umfasst einen mit Fluid F gefüllten Fluidspeicher 2. Über eine Entnahmeleitung 30 kann aus einem Entnahmebereich 9, der im Fluidspeicher 2 geodätisch oben angeordnet ist, Fluid F entnommen werden. Hier ist ein zweiter Temperatursensor 12 zur Erfassung einer zweiten Fluidtemperatur T2 im Entnahmebereich 9 vorgesehen. Am geodätisch unteren Ende des Fluidspeichers 2 mündet eine Speiseleitung 31 ein. Durch diese strömt Fluid F nach, wenn über die Entnahmeleitung 30 Fluid F entnommen wird.

Weiterhin weist die Heizungsvorrichtung 1 einen Wärmetauscher 3 auf, dessen Vorlaufleitung 4 geodätisch tiefer liegend hydraulisch mit dem Fluidspeicher 2 verbunden ist als dessen Rücklaufleitung 5. Insbesondere mündet die Rücklaufleitung 5 im Bereich der geodätischen Oberseite des Fluidspeichers 2 in diesen. Dahingegen mündet die Vorlaufleitung 4 im Bereich der geodätischen Unterseite des Fluidspeichers 2 in diesen.

In der Vorlaufleitung 4 ist eine Pumpe 6 zur Förderung von Fluid F angeordnet. Hinzu kommt ein Bypass 7, der hydraulisch mit der Vorlaufleitung 4 und der Rücklaufleitung 5 verbunden ist und dabei den Wärmetauscher 3 und die Pumpe 6 überbrückt. In der Verbindung des Bypass 7 mit der Rücklaufleitung 5 ist ein Dreiwegeventil 8 angeordnet, welches regelbar ist.

Der Wärmetauscher 3, das Dreiwegeventil 8 und der Bypass 7 sind außerhalb des Fluidspeichers 2 angeordnet. Zwischen dem Wärmetauscher 3 und dem Bypass 7 findet sich im Bereich der Rücklaufleitung 5 ein erster Temperatursensor 11 zur Erfassung einer ersten Fluidtemperatur T1 in der Rücklaufleitung 5.

Ferner erkennt man, dass der Wärmetauscher 3 ein Kondensator 21 einer Wärmepumpe 20 ist. Die Wärmepumpe 20 umfasst dabei einen Wärmepumpenkreislauf für ein Kältemittel K, in den der Kondensator 21 integriert ist. Zusätzlich ist ein Verdampfer 22 in den Wärmepumpenkreislauf integriert. In Strömungsrichtung des Kältemittels K vor dem Kondensator 21 findet sich weiterhin ein Verdichter 23 und in Strömungsrichtung hinter dem Kondensator 21 ein Expansionsventil 24. Das Kältemittel K und das Fluid F strömen so im Gegenstrom durch den Kondensator 21, wobei das Kältemittel K Wärme auf das Fluid F überträgt.

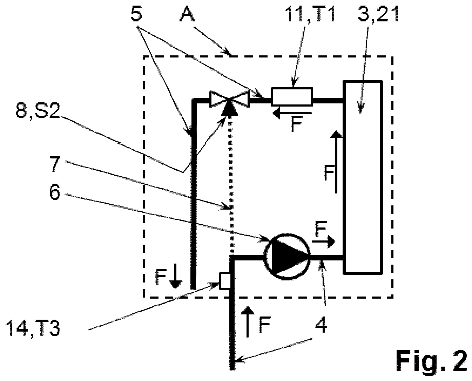

Das Dreiwegeventil 8 ist von einer Regeleinheit 10 angesteuert, in der eine Solltemperatur TS hinterlegt ist. Die Regeleinheit 10 ist zur Festlegung der Schaltstellungen S1, (S2, vgl. hierzu Fig. 2) des Dreiwegeventils 8 datenkommunizierend mit dem ersten Temperatursensor 11 verbunden. Weiterhin bestehen Verbindungen der Regeleinheit 10 zu dem Verdichter 23 der Wärmepumpe 20, der Pumpe 6, sowie dem zweiten und einem dritten Temperatursensor 12, 14. Der dritte Temperatursensor 14 dient der Erfassung der dritten Fluidtemperatur T3 in der Vorlaufleitung 4 vor dem Bypass 7. Alternativ zur gezeigten Position außerhalb des Fluidspeichers 2 kann der dritte Temperatursensor 14 auch im Bereich der Entnahmeöffnung der Vorlaufleitung 4 positioniert werden.

Die Regeleinheit 10 ist mithin geeignet dazu, ein Verfahren zum Betrieb der Heizungsvorrichtung 1 durchzuführen, bei dem zunächst die Pumpe 6 aktiviert und der Wärmetauscher 3 mit Fluid F durchströmt wird. Zusätzlich aktiviert die Regeleinheit 10 den Verdichter 23 der Wärmepumpe 20. Im unter dem Druck des Verdichters 23 stehenden Wärmetauscher 3 überträgt das hierdurch auf ein hohes Temperaturniveau angehobene Kältemittel K Wärme auf das Fluid F. Mit Hilfe des ersten Temperatursensors 11 bestimmt die Regeleinheit 10 die erste Fluidtemperatur T1 in der Rücklaufleitung 5 zwischen dem Wärmetauscher 3 und dem Bypass 7. Diese erste Fluidtemperatur T1 wird mit der hinterlegten Solltemperatur TS verglichen.

Basierend auf dem Ergebnis des Vergleichs, schaltet die Regeleinheit 10 das Dreiwegeventil 8 in eine erste Schaltstellung S1, wenn die erste Fluidtemperatur T1 kleiner als die Solltemperatur TS ist. In der von Fig. 1 gezeigten ersten Schaltstellung S1 ist der Bypass 7 vollständig freigegeben. Der in den Fluidspeicher 2 mündende Abschnitt der Rücklaufleitung 5 ist hingegen vom Dreiwegeventil 8 geschlossen. Entsprechend zirkuliert das Fluid F über den Bypass 7 und den Wärmetauscher 3.

Wenn die erste Fluidtemperatur T1 größer als die Solltemperatur TS ist, schaltet die Regeleinheit 10 das Dreiwegeventil 8 hingegen in eine zweite Schaltstellung S2, wie sie in Fig. 2 erkennbar ist. Fig. 2 zeigt hierbei einen Ausschnitt A aus der Fig. 1, wobei abweichend zu der in Fig. 1 gezeigten ersten Schaltstellung S1 die zweite Schaltstellung S2 dargestellt ist. In der zweiten Schaltstellung S2 ist der Bypass 7 geschlossen. Dann wird das auf Solltemperatur TS erwärmte Fluid F in den Entnahmebereich 9 des Fluidspeichers 2 geleitet und es strömt kühleres Fluid F aus dem Fluidspeicher 2 über die Vorlaufleitung 4 nach.

Günstiger Weise berücksichtigt die Regeleinheit eine Hysterese bei einem Wechsel zwischen den Schaltstellungen S1, S2 des Dreiwegeventils 8, um ein schnelles Hin- und Herschalten zu vermeiden, wenn die erste Fluidtemperatur T1 um die Solltemperatur TS pendelt.

Mittels der Regeleinheit 10 kann zudem die Pumpe 6 deaktiviert werden, wenn die dritte Fluidtemperatur T3 in der Vorlaufleitung 4 vor dem Bypass 7 höher ist als die Solltemperatur TS.

Weiterhin kann von der Regeleinheit 10 ein vorrangiges Schalten des Dreiwegeventils 8 in die zweite Schaltstellung S2 vorgesehen sein, wenn eine Einhaltung der Solltemperatur TS in dem Entnahmebereich 9 nicht erforderlich ist. Hierfür können von einem Verbraucher Zeiträume in der Regeleinheit 10 hinterlegt werden.

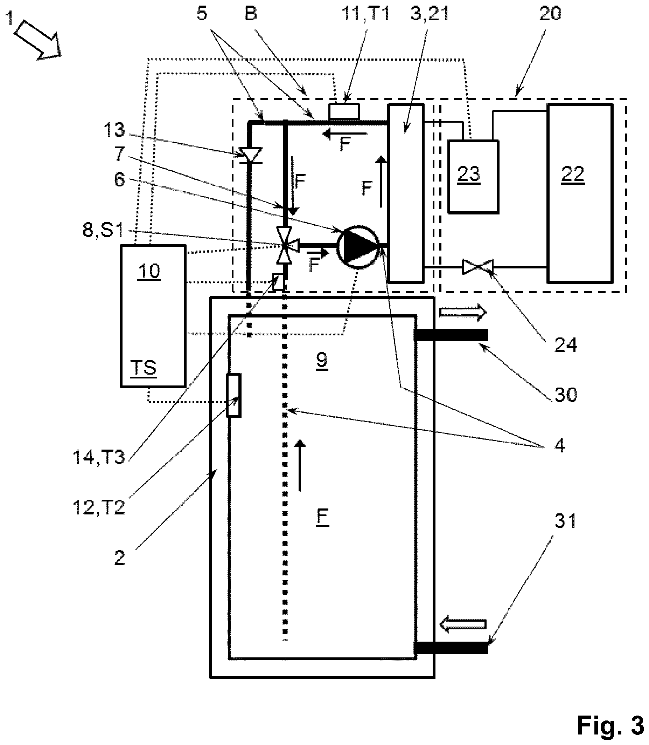

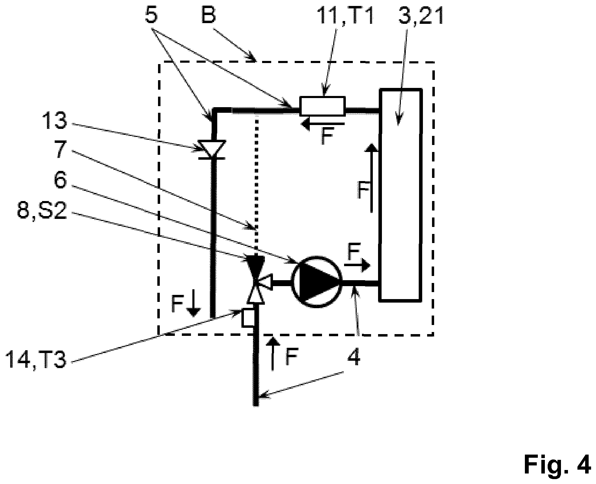

Fig. 4 zeigt einen Ausschnitt B aus der in Fig. 3 gezeigten Heizungsvorrichtung 1, die in weiten Teilen der von Fig. 1 entspricht. Abweichend zu Fig. 1, ist in der Ausführungsform der Fig. 3 das Dreiwegeventil 8 in der Verbindung zwischen dem Bypass 7 und der Vorlaufleitung 4 angeordnet. Außerdem findet sich in der Rücklaufleitung 5 zwischen dem Fluidspeicher 2 und dem Bypass 7 ein zusätzliches Rückschlagventil 13.

In Fig. 4 wird wie in Fig. 2 eine zweite Schaltstellung S2 des Dreiwegeventils 8 dargestellt. In dieser ist auch in Fig. 4 der Bypass 7 vollständig vom Dreiwegeventil 8 blockiert.

Abweichend zu Fig. 1 ist gemäß der in Fig. 3 gezeigten ersten Schaltstellung S1 des Dreiwegeventils 8 der Bypass 7 nur teilweise freigegeben. Gleichzeitig ist der vom Fluidspeicher 2 zum Dreiwegeventil 8 führende Abschnitt der Vorlaufleitung 4 wenigstens teilweise geöffnet. Im Dreiwegeventil 8 erfolgt daher eine Vermischung des erwärmten Fluids F aus dem Bypass 7 mit dem kühlen Fluid F aus der Vorlaufleitung 4. Die Regeleinheit 10 regelt dabei das Dreiwegeventil 8 derart in der ersten Schaltstellung S1, dass das Fluid F in der Rücklaufleitung 5 kontinuierlich die Solltemperatur TS aufweist.

## Patentansprüche

1. Verfahren zum Betrieb einer Heizungsvorrichtung (1), welche Heizungsvorrichtung (1) verfügt über
- einen Fluidspeicher (2),
- einen Wärmetauscher (3), dessen Vorlaufleitung (4) geodätisch tiefer liegend hydraulisch mit dem Fluidspeicher (2) verbunden ist als dessen Rücklaufleitung (5),
- eine Pumpe (6), die in der Vorlaufleitung (4) oder der Rücklaufleitung (5) angeordnet ist,
- einen Bypass (7), der hydraulisch mit der Vorlaufleitung (4) und der Rücklaufleitung (5) verbunden ist, wobei der Bypass (7) den Wärmetauscher (3) und die Pumpe (6) überbrückt, und
- ein Dreiwegeventil (8), angeordnet in der Verbindung des Bypass (7) mit der Vorlaufleitung (4) oder in der Verbindung des Bypass (7) mit der Rücklaufleitung (5),
wobei das Verfahren die folgende Schritte: beinhaltet
a) Aktivieren der Pumpe (6) und Durchströmen des Wärmetauschers (3) mit Fluid (F),
b) Übertragen von Wärme auf das Fluid (F) im Wärmetauscher (3),
c) Bestimmen einer ersten Fluidtemperatur (T1) in der Rücklaufleitung (5) zwischen dem Wärmetauscher (3) und dem Bypass (7),
d) Vergleichen der ersten Fluidtemperatur (T1) mit einer Solltemperatur (TS), und
e1) Schalten des Dreiwegeventils (8) in eine zweite Schaltstellung (S2), bei welcher der Bypass (7) geschlossen ist, wenn die erste Fluidtemperatur (T1) größer als die Solltemperatur (TS) ist.
**gekennzeichnet durch**
e2) Schalten des Dreiwegeventils in eine erste Schaltstellung, bei welcher der Bypass wenigstens teilweise freigegeben ist, wenn die erste Fluidtemperatur kleiner als die Solltemperatur ist, wobei das Dreiwegeventil bei teilweisem Freigeben des Bypasses auf Solltemperatur erwärmtes Fluid mengenmäßig auf den Bypass und auf die Rücklaufleitung zum Fluidspeicher verteilt.

2. Verfahren nach Anspruch 1, **gekennzeichnet durch** folgenden Schritt:
f) Deaktivieren der Pumpe (6), wenn eine dritte Fluidtemperatur (T3) in der Vorlaufleitung (4) vor dem Bypass (7) höher ist als die Solltemperatur (TS).

3. Verfahren nach einem der Ansprüche 1 oder 2,
wobei bei einem Wechsel zwischen den Schaltstellungen (S1, S2) des Dreiwegeventils (8) eine Hysterese berücksichtigt wird.

4. Verfahren nach einem der Ansprüche 1 bis 3,
**gekennzeichnet durch** folgenden Schritt:
g) Vorrangiges Schalten des Dreiwegeventils (8) in die zweite Schaltstellung (S2), wenn eine Einhaltung der Solltemperatur (TS) in einem geodätisch oben im Fluidspeicher (2) angeordneten Entnahmebereich (9) nicht erforderlich ist.

5. Heizungsvorrichtung (1) mit einem Fluidspeicher (2), mit einem Wärmetauscher (3), dessen Vorlaufleitung (4) geodätisch tiefer liegend hydraulisch mit dem Fluidspeicher (2) verbunden ist als dessen Rücklaufleitung (5), und mit einer Pumpe (6), die in der Vorlaufleitung (4) oder der Rücklaufleitung (5) angeordnet ist, wobei ein Bypass (7) hydraulisch mit der Vorlaufleitung (4) und der Rücklaufleitung (5) verbunden ist, wobei der Bypass (7) den Wärmetauscher (3) und die Pumpe (6) überbrückt, und wobei ein Dreiwegeventil (8) in der Verbindung des Bypass (7) mit der Vorlaufleitung (4) oder in der Verbindung des Bypass (7) mit der Rücklaufleitung (5) angeordnet ist wobei das Dreiwegeventil (8) regelbar ist, und dass in der Rücklaufleitung (5) zwischen dem Wärmetauscher (3) und dem Bypass (7) ein erster Temperatursensor (11) zur Erfassung einer ersten Fluidtemperatur (T1) in der Rücklaufleitung (5) angeordnet ist, wobei das Dreiwegeventil (8) von einer Regeleinheit (10) angesteuert ist, in der eine Solltemperatur (TS) hinterlegt ist, und die datenkommunizierend mit dem ersten Temperatursensor (11) verbunden ist, **dadurch gekennzeichnet, dass** das Dreiwegeventil (8) in einer ersten Schaltstellung (S1) derart angesteuert ist, dass das Dreiwegeventil (8) bei teilweisem Freigeben des Bypasses (7) auf Solltemperatur (TS) erwärmtes Fluid (F) mengenmäßig auf den Bypass (7) und auf die Rücklaufleitung (5) zum Fluidspeicher (2) verteilt.

6. Heizungsvorrichtung (1) nach Anspruch 5,
**dadurch gekennzeichnet, dass** der Wärmetauscher (3) ein Kondensator (21) einer Wärmepumpe (20) ist.

## Claims

1. Method for operating a heating device (1), which heating device (1) has
- a fluid reservoir (2),
- a heat exchanger (3), the supply line (4) of which is hydraulically connected to the fluid reservoir (2) at a geodetically lower position than the return line (5) of the said heat exchanger,
- a pump (6), which is arranged in the supply line (4) or in the return line (5),
- a bypass (7), which is hydraulically connected to the supply line (4) and to the return line (5), the bypass (7) bypassing the heat exchanger (3) and the pump (6), and
- a three-way valve (8), arranged in the connection of the bypass (7) to the supply line (4) or in the connection of the bypass (7) to the return line (5),
wherein the method comprises the following steps:
a) activation of the pump (6) and flow of fluid (F) through the heat exchanger (3),
b) transfer of heat to the fluid (F) in the heat exchanger (3),
c) determination of a first fluid temperature (T1) in the return line (5) between the heat exchanger (3) and the bypass (7),
d) comparison of the first fluid temperature (T1) with a setpoint temperature (TS), and
e1) switching of the three-way valve (8) into a second switching position (S2), in which the bypass (7) is closed, if the first fluid temperature (T1) is greater than the setpoint temperature (TS),
**characterized by**
e2) switching of the three-way valve into a first switching position, in which the bypass is at least partially released, if the first fluid temperature is less than the setpoint temperature, wherein, whenever the bypass is partially open, the three-way valve quantitatively distributes fluid that is heated to the setpoint temperature between the bypass and the return line leading to the fluid reservoir.

2. Method according to Claim 1, **characterized by** the following step:
f) deactivation of the pump (6), if a third fluid temperature (T3) in the supply line (4) upstream of the bypass (7) is higher than the setpoint temperature (TS).

3. Method according to either of Claims 1 and 2, wherein hysteresis is taken into account whenever there is a change between the switching positions (S1, S2) of the three-way valve (8).

4. Method according to one of Claims 1 to 3, **characterized by** the following step:
g) prioritized switching of the three-way valve (8) into the second switching position (S2), if compliance with the setpoint temperature (TS) in a removal region (9) arranged geodetically at the top in the fluid reservoir (2) is not required.

5. Heating device (1) having a fluid reservoir (2), having a heat exchanger (3), the supply line (4) of which is hydraulically connected to the fluid reservoir (2) at a geodetically lower position than the return line (5) of the said heat exchanger, and having a pump (6), which is arranged in the supply line (4) or in the return line (5), wherein a bypass (7) is hydraulically connected to the supply line (4) and to the return line (5), the bypass (7) bypassing the heat exchanger (3) and the pump (6), and wherein a three-way valve (8) is arranged in the connection of the bypass (7) to the supply line (4) or in the connection of the bypass (7) to the return line (5), wherein the three-way valve (8) can be controlled and there is a first temperature sensor (11) for detecting a first fluid temperature (T1) in the return line (5) arranged between the heat exchanger (3) and the bypass (7) in the return line (5), the three-way valve (8) being controlled by a control unit (10) in which a setpoint temperature (TS) is stored and which is connected to the first temperature sensor (11) in a data communicating manner, **characterized in that** the three-way valve (8) in a first switching position (S1) is controlled in such a manner that, whenever the bypass (7) is partially open, the three-way valve (8) quantitatively distributes fluid (F) that is heated to the setpoint temperature (TS) between the bypass (7) and the return line (5) leading to the fluid reservoir (2).

6. Heating device (1) according to Claim 5, **characterized in that** the heat exchanger (3) is a condenser (21) of a heat pump (20).

## Revendications

1. Procédé de conduite d'un dispositif de chauffage (1), le dispositif de chauffage (1) présentant un réservoir (2) de fluide,
un échangeur de chaleur (3) dont le conduit de départ (4) est relié hydrauliquement au réservoir (2) de fluide à une altitude plus basse que son conduit de retour (5),
une pompe (6) disposée dans le conduit de départ (4) ou le conduit de retour (5),
une dérivation (7) reliée hydrauliquement au conduit de départ (4) et au conduit de retour (5), la dérivation (7) contournant l'échangeur de chaleur (3) et la pompe (6),
une soupape (8) à trois voies disposée dans la liaison entre la dérivation (7) et le conduit de départ (4) ou dans la liaison entre la dérivation (7) et le conduit de retour (5),
le procédé présentant les étapes suivantes :
a) activation de la pompe (6) et traversée de l'échangeur de chaleur (3) par un fluide (F),
b) transfert de chaleur vers le fluide (F) présent dans l'échangeur de chaleur (3),
c) détermination d'une première température (T1) du fluide dans le conduit de retour (5) entre l'échangeur de chaleur (3) et la dérivation (7),
d) comparaison de la première température (T1) du fluide à une température de consigne (TS) et
e1) lorsque la première température (T1) du fluide est supérieure à la température de consigne (TS), commutation de la soupape (8) à trois voies dans une deuxième position de commutation (S2) dans laquelle la dérivation (7) est fermée,
**caractérisé par**
e2) lorsque la première température du fluide est inférieure à la température de consigne, commutation de la soupape à trois voies dans une première position de commutation dans laquelle la dérivation est au moins en partie libérée, la soupape à trois voies répartissant entre la dérivation et le conduit de retour en direction de la réserve de fluide le débit de fluide chauffé à la température de consigne lorsque la dérivation est partiellement libérée.

2. Procédé selon la revendication 1, **caractérisé par** l'étape suivants :
f) désactivation de la pompe (6) si une troisième température (T3) du fluide dans le conduit de départ (4) en amont de la dérivation (7) est supérieure à la température de consigne (TS).

3. Procédé selon l'une des revendications 1 ou 2, dans lequel une hystérèse est prise en compte lors d'une commutation entre les positions de commutation (S1, S2) de la soupape (8) à trois voies.

4. Procédé selon l'une des revendications 1 à 3, **caractérisé par** l'étape suivants :
g) commutation prioritaire de la soupape (8) à trois voies dans la deuxième position de commutation (S2) lorsque le maintien de la température de consigne (TS) dans une partie de prélèvement (9) disposée à une altitude haute dans la réserve (2) de fluide n'est pas nécessaire.

5. Dispositif de chauffage (1) présentant un réservoir (2) de fluide,
un échangeur de chaleur (3) dont le conduit de départ (4) est relié hydrauliquement au réservoir (2) de fluide à une altitude plus basse que son conduit de retour (5),
une pompe (6) disposée dans le conduit de départ (4) ou le conduit de retour (5),
une dérivation (7) reliée hydrauliquement au conduit de départ (4) et au conduit de retour (5), la dérivation (7) contournant l'échangeur de chaleur (3) et la pompe (6),
une soupape (8) à trois voies disposée dans la liaison entre la dérivation (7) et le conduit de départ (4) ou dans la liaison entre la dérivation (7) et le conduit de retour (5),
la soupape (8) à trois voies pouvant être réglée, un premier capteur (11) de température étant disposé dans le conduit de retour (5) entre l'échangeur de chaleur (3) et la dérivation (7) pour saisir une première température (T1) de fluide dans le conduit de retour (5),
la soupape (8) à trois voies étant commandée par une unité de régulation (10) dans lequel est conservée une température de consigne (TS) et reliée à communication de données au premier capteur (11) de température,
**caractérisé en ce que**
dans une première position de commutation (S1), la soupape (8) à trois voies est commandée de telle sorte que la soupape (8) à trois voies répartit le débit de fluide (F) chauffé à la température de consigne (TS) lorsque la dérivation (7) est partiellement ouverte, entre la dérivation (7) et le conduit de retour (5) en direction de la réserve (2) de fluide.

6. Dispositif de chauffage (1) selon la revendication 5, **caractérisé en ce que** l'échangeur de chaleur (3) est le condenseur (21) d'une pompe à chaleur (20).
